# EUROPEAN PATENT SPECIFICATION

(11) **EP 2 507 983 B1**
(45) Date of publication and mention of the grant of the patent: **05.04.2017**
(21) Application number: 10816320.5
(22) Date of filing: 01.12.2010
(51) Int. Cl.: H04M 3/42, H04L 29/08

(54) **USING CALLEE'S STATUS TO ENHANCE CALLER NOTIFICATION**
VERWENDUNG DES ANRUFEMPFÄNGERSTATUS FÜR VERBESSERTE ANRUFERBENACHRICHTIGUNG
UTILISATION DE L'ÉTAT D'UN APPELÉ POUR AMÉLIORER LA NOTIFICATION D'UN APPELANT

(30) Priority: 01.12.2009 US 265737 P
(43) Date of publication of application: 10.10.2012
(73) Proprietor: Orange, 75015 Paris (FR)
(72) Inventor: LU, Zhao, San Francisco CA 94115 (US)
(86) International application number: PCT/IB2010/003437
(87) International publication number: WO 2011/067676

(56) References cited:
- EP-A1- 1 395 017
- US-A1- 2007 162 569
- US-A1- 2009 168 977

## Description

### FIELD OF THE PRESENT SYSTEM:

The present system relates to voicemail greetings and more particularly to using a callee's dynamic status to enhance caller notification.

### BACKGROUND OF THE PRESENT SYSTEM:

In the recent past, the ease of use and features of phone devices were closely tied to the state of development of telephone communication networks, which, before the appearance of cell phones, were limited to public switched telephone network (PSTN) landlines to homes, offices, and stationary public phone booths. Such arrangement had a built in limitation in that a caller could only be sure to actually reach a callee if and when the callee was present at the location of the phone being called at the time the call was placed. To gauge a simple status of the callee with regard to the location of the phone being called, e.g., "present", "away, but will be right back", "will be back tomorrow", "away on vacation", etc., was only possible if the caller was told of the callee's status or was familiar with the callee's schedule, e.g., during work hours the callee is known to be reachable at work in the office and after work hours at home.

The situation has markedly improved with the arrival of call answering machines, enabling recording of voicemail and featuring pre-recorded status messages to be played back upon the callee's failure to pick-up the phone. At first, the call answering/voicemail systems were limited to personal apparatus connectable to or integrated with house or office phone apparatuses. These answering/voicemail systems commonly came with a factory recorded message, but provided an ability to the owner to record and re-record personalized messages to be listened to by the callers. Thus, these personalized messages were able to indicate a changing status of the callee, however in a static way since the system was dependent on the callee to update the status. In these prior systems, the callee could now retrieve the messages left by callers not only in person but also by calling their own phone from remote locations.

As technology advanced, the functionality of the call answering/voicemail systems has migrated to local, e.g., office, PBXs and the phone companies' centrally located computers. This migration has eliminated the need for an individual answering machine, simplified retrieval of the voicemail, and paved the way for the call answering systems currently used in cell phones.

With pervasiveness of mobile phone devices and the wireless phone communication enabling phone users to be reachable at any time and virtually at any location. When calling another person's wireless phone, it is impossible to know that the callee does not want to be disturbed, e.g., interrupted during an important meeting or function, while driving, or that simply the calling is inappropriate for the callee, such as when the callee is taking a nap or sleeping.

Therefore, what is needed is a way to make the callee's status dynamic, simple to change, and easily available to the caller.

The patent publication US 2009/0168977 discloses the provision of an enhanced connection by providing a status indication of the called party to the calling party and associating the status indication with a message to be sent to the called party.

### SUMMARY OF THE PRESENT SYSTEM:

It is an object of the present system to overcome disadvantages and/or make improvements in the prior art.

It is another object of the present system to provide a novel, easily updatable, dynamic status and a way to use the novel dynamic status to facilitate communication between a plurality of users.

Provided is a method of enabling a first user of a plurality of users of phone devices to make calls to second users selected from the plurality of users, the calls are made on the basis of status of the second users, each of the plurality of users being in communication with a status server that includes a profile page for each of the plurality of users. The method including acts of updating a status of each user on that user's profile page; and providing to the phone device of the first user available statuses of the second users, wherein the first user makes a call to one of the second user in response to and knowing the status of that second user.

### BRIEF DESCRIPTION OF THE DRAWINGS:

The present system is explained in further detail, and by way of example, with reference to the accompanying drawings wherein:
FIG. 1a is a diagram of one embodiment of the present system showing setting of a callee' status on a status server by a client application executing on a callee' phone device and/or on a third party websites, e.g., facebook, twitter, etc., by callee' computing device and retrieval of the callee' status by callers;
FIG. 1b is a diagram of one embodiment of the present system showing the recording of the callee's status by the client application executing on the callee's phone device on the status server;
FIG. 1c is an illustration of user interface showing a display of the status provided by a client application running on the callee's phone device in accordance with one embodiment of the present system;
FIG. 2 is a high-level diagram of one embodiment of an inventive system for managing interpersonal communications that utilizes a status feature in accordance with one embodiment of the present system;
FIG. 3 is a diagram of one embodiment of the present system showing ways of retrieving the callee' status;
FIG. 4 is a diagram of one embodiment of the present system showing when callee's status is set; and
FIG. 5 is a basic diagram of phone and server devices in accordance with one embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

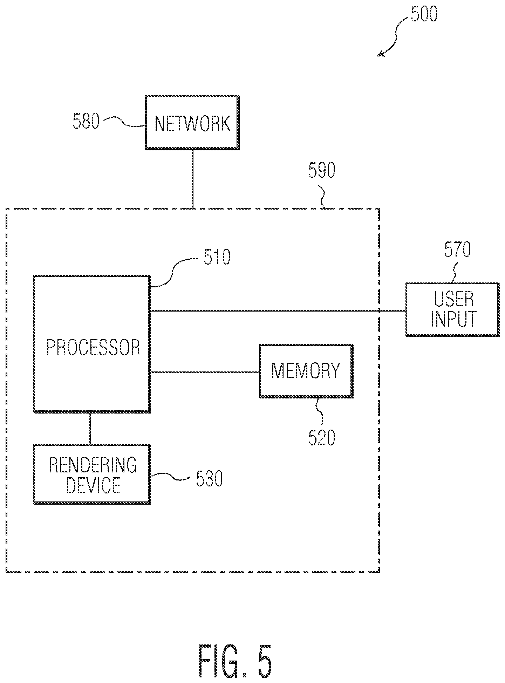

The present system introduces a status for use in communication systems having a plurality of subscribers connected to a wireless and/or wired network. The networks may comprise a cellular phone network and/or the Internet. The devices used for the present system may include any computing device, e.g., device depicted in FIG. 5, which is connectable to a status server as described further herein.

In accordance with an embodiment of the present system, the status may be a message shared with one or more connectable computing devices, only registered computing devices, on a subscription basis and/or at the callee's discretion. For example, when a first user initiates or changes its status, by changing its status message to read: "I am at the movies", the status may be forwarded, shared, or pushed to one or more computing devices registered to receive the status message or those computing devices subscribing to receive the status message.

The status is dissimilar to the static greeting used with common voicemail systems discussed above. Use of the status may be better explained with an example of phone or e-mail contact lists, listing numbers on a phone or e-mail addresses on e-mail enabled computing devices. Currently, cell phones comprise contact lists, which list individual contacts and all of the telephone numbers associated with each individual contact. A status list of the present system is generated to list the status of each of the subscribing individual contacts. It will be clear to these skilled in the art that contact information may be easily shared with the status list as the contact information on the subscribing individual is stored in the contact list.

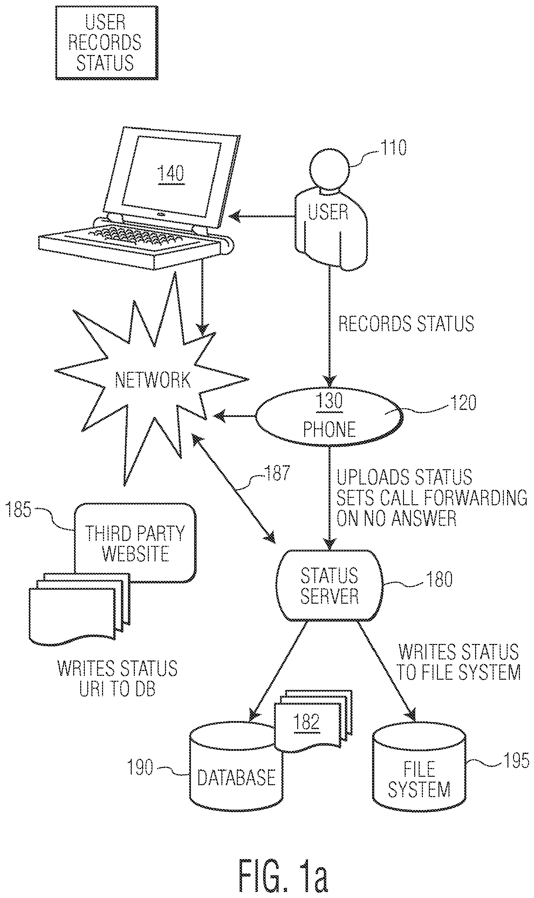

FIG. 1a illustrates a status server 180 in accordance with an embodiment of the present system that is connected to a cellular phone network on which a communication device, such as a phone 130 operates. The phone 130 may also access one or more of wired and wireless networks, such as the Internet, for having access to computing devices 140 and third party websites 185. Callee 110 may set or re-set their status using a client application 120, for example, executing on a callee's phone device 130. In one embodiment of the present system, the application 120 forwards the status to the status server 180 which may store and communicate it in the Short Message Service (SMS) format. In accordance with the present system, SMS text messages, recorded voice messages, and/or transcription of the recorded voice messages to text may be easily and conveniently used to change the callee's status and provide the callee's up-to-date status to callers, as well as, use the status for auto-replies in SMS text messaging, and more.

Alternatively, the callee 110 may set or re-set their status via a further communication device, such as a computing device 140, by connecting directly to the status server 180 or on a third party website 185, e.g., facebook, twitter, Tripit, etc., and the status server 180 may retrieve the status from these websites 185. In this embodiment, the status server 180 may be connected directly to a network, such as an Internet cloud through a connection 187. In this way, the status server 180 may actively monitor the third party website 185 or an application directly, such as twitter, etc., and extract the status directly, such as out of tweets.

For example, besides directly providing a user's status with a voicemail, such as from an android "status" application, in accordance with an embodiment of the present system, a tweet may be provided as status or as a voicemail. In this way, leaving someone a voicemail does not even require a physical phone. In addition, in accordance with an embodiment of the present system, the present system further enables a caller to reply to such status and transform the replies to voicemails so that the callee can listen to them while away from their computer.

For example, Bill may write on twitter: "I'm going to Black Friday shopping at Macy's. This tweet may be captured in accordance with an embodiment of the present system to become the status for Bill. Upon seeing Bill's twitter status, George tweets back saying: "good idea Bill, I will meet you at Macy's to get some good deals." This tweet reply may be captured in accordance with the present system to become a voicemail for Bill, which if the voicemail utilizes Push notification, Bill will receive a notification about a new voicemail. He may then check his voicemail and hear that George is coming to meet him. In this way, status may be integrated into other applications such that information provide by a user may be utilized in a traditional way (e.g., as a tweet on twitter) in addition to as a source of user status.

In accordance with a further embodiment of the present system, a specific indication may be provided within another application to indicate that a status is being provided. For example, when a twitter user tweets, for example adding a hashtag "#statut", the tweet may be utilized as their status, hence available as her voicemail greeting etc. In this way, a status application in accordance with this embodiment can monitor live streaming data (such as a twitter stream) and turn relevant information into status. Additionally, in accordance with a further embodiment, when someone replies to the tweet (e.g., I'm having a pizza at Dino's #statut), the replies may also be extracted by an application in accordance with the present system such that the reply becomes the callers reply to the callee's current status.

In any event and regardless of how the status is set, the status (e.g., changed, reset, etc.) may be saved by the status server 180 to a callee's profile 182 in a database 190. The status server 180 makes the callee's status available or accessible for retrieval by callers (e.g., callee's subscribers) via their respective phones 130 and computing devices 140.

It is understood that in accordance with the present system, the same status may be used for all of callee's phones 130. In accordance with the present system, two or more of the callee's phones 130 may have a correspondence with one of callee's statuses or each of callee's phones 130 may have a one to one correspondence with a corresponding callee's status. Further, using implementation techniques known to these skilled in the art, the callee 110 may restrict access to their status to callers in their circle of friends, by a pre-defined default scheme, and/or allow open access. For example, a callee's cell phone may have a restricted status distributed to only a restricted group of friends while the callee's office number has an open status available to any user of the present system (e.g., a caller running the client application 120).

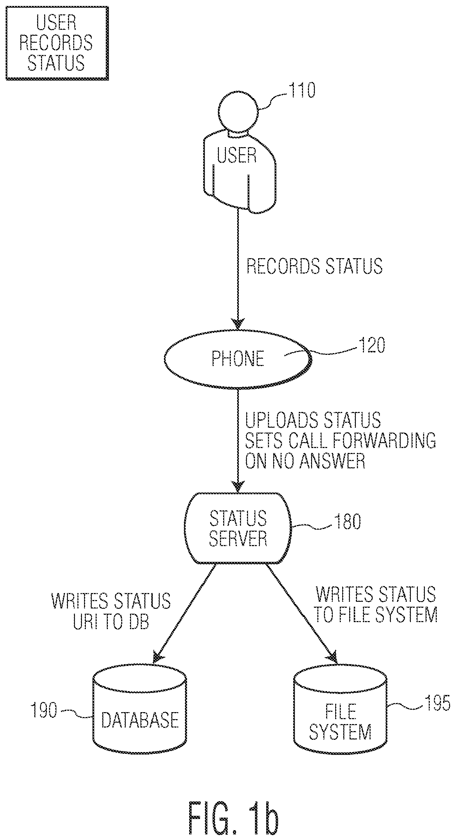

In one embodiment, to set the callee's status, the client application 120 sends a message to a pre-defined phone number associated with the status server 180. As illustrated in FIG. 1b, the callee 110 may use the status client application 120 on the phone device to record a message akin to a voicemail greeting that indicates his or her status.

As shown, FIG. 1b is a diagram of one embodiment of the present system showing the recording of the callee's status by the client application executing on the callee's phone device on the status server. The client application 120 uploads the recorded status message to the status server 180. The status server 180 then stores the status message as a file in a file system 195 and may record a uniform resource identifier (URI) of the status message in a database 190, e.g., MySQL, for later lookup. As may be readily appreciated, other systems for identifying and retrieving a stored status of the callee may be suitably applied in accordance with the present system.

In another embodiment, to set the callee's status, the client application 120 may extract information from applications running on the phone device 130 or the computing device 140, such as a calendar application in which the callee 110 has recorded information about a meeting, for example, "a phone conference with Jack from 11:30 to 12:45". As was discussed above, the extracted information may be provided to the status server 180 from the phone device 130 or the computing device 140. The status server 180 stores the extracted status message as a file in a file system 195 and may record a uniform resource identifier (URI) of the extracted status message in a database 190 for later lookup.

The use of the status may be enabled and disabled by the callee sending a command, e.g., "status off" to the status server 180. Also different levels of visibilities of the status may be set. For example, only callee's subscribers, as defined in an address book maintained on the status server 180, may know the status. Similarly, public and private status may be provided. All callers being able to view the public status of the callee 110, while only the callee's subscribers will be permitted to view the private status. The status server 180 may provide privacy settings to control the public/private status' visibility. In accordance with an embodiment of the present system, the public status may be used as a voicemail greeting message for an existing voicemail system. In accordance with an embodiment of the present system, for public status, there may be a number of different ways of expressing the status to different groups of callers. For example, a user may choose to expose his location to one group of callers, such as I'm having brunch at Ella's on California Street. However, for a different group of callers the status may be "I'm having lunch", without even mention of the restaurant name and location.

An example of use of the status on a cellular device with the help of the client application 120 is illustrated in FIG. 1b. At present, when status is not used, a cell phone call is initiated when a caller dials the callee's number using phone keys or selects a name/number combination from a contacts list or a previous calls list. The cell phone makes a call to the selected number typically with an intention of having a person to person conversation or to send a text message, a voice message, or a picture. The callee is expected to answer the call while the text, voice and picture messages are received without requiring the callee's intervention. When the callee fails to answer, a pre-recorded voicemail greeting sounds and the caller is typically invited to leave a voicemail.

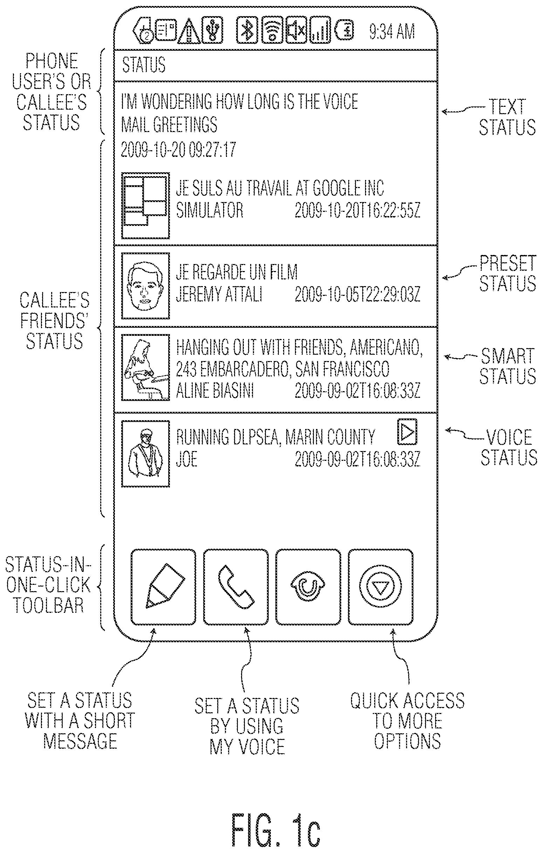

In accordance with the present system, the caller is provided with an additional new option heretofore unavailable to the caller. Even before the call is initiated, the caller is made aware of the callee's status, e.g., if the callee is able to answer the call and if not, why not. This is achieved through the callee's friends' statuses as in illustratively shown in FIG. 1c. FIG. 1c is an illustration of user interface (UI) showing a display of the status provided by a client application running on a device, such as the callee's phone device in accordance with one embodiment of the present system. As illustrated, the statuses, for example, may be preset as in the case of Mr. Attali; may be smart, as in the case of Ms. Biasini; and may be a voice status, as with Joe.

In accordance with a further embodiment of the present system, the status UI may be integrated into existing applications (e.g., widget, program extension, etc.) such as an address book application, calendar application, etc., on a mobile phone, where for example in a case of an address book application, in addition to viewing name and phone number, the address book application would also show the status of the contact. In this embodiment, it may not be necessary for a user to install a separate application, such as a separate status client application for an Android operating system based phone.

As illustrated, the preset status may be a text status entered by a user (e.g., caller, callee), for example as an SMS regarding the users status, through the use of selection of a feature illustratively shown within the UI as a pencil at the bottom of the UI. As may be readily appreciated, naturally the status may be set by the user in other ways such as through use of the phone device's keypad.

In accordance with an embodiment of the present system, a voice status may be entered by pressing the depiction of a handset with the UI and talking into the phone's microphone. The recorded message may be stored, as described above, and/or may be transcribed into an SMS status, for example for retrieval by a callee's device. With the smart status, the status server 180 may infer from the geolocation of the status user, as well as other event information and use this data to enhance the status. For example, in accordance with an embodiment of the present system, the address, 243 Embarcadero, of the Americano restaurant may be added to the specified status. For example a status of "Hanging out with friends" may be expanded to include the address of a location in a case wherein the present system may supplement a given status such as by inferring the address from other information, such as through use of a GPS embedded within the callee's phone device. For example, the callee's phone device may provide a GPS location to the status server which may translate the GPS provided location to an address corresponding to the GPS location.

In accordance with another embodiment of the present system, the status may be provided with different granularity based on the callers relationship to the callee, such as for example determined by the callee. In accordance with an embodiment of the present system, the term "granularity" refers to different levels of details that are provided as a status indication. For example, in accordance with an embodiment of the present system, a current status of a callee may include several statuses such as "hanging out with friends" may be translated in accordance with a preference of the callee to a status "unavailable" which may be provided to a caller that has restricted access to the callee's status (e.g., a business acquaintance of the callee), while the status "hanging out with friends" may be provided to caller's that are family of the callee, while still further, the status of "hanging out with friends, Americano, 243 Embarcadero, San Francisco" may be provided to callers that are friends of the callee, such as for example identified by the callee's contact list. In accordance with another embodiment of the present system, the relationship that defines what status of the callee is provided to a caller may be negotiated between the callee and the caller utilizing an invitation/consent transaction executed between the callee and the caller utilizing a program portion executed on one or more devices.

Additionally, the status may be supplemented/received from data provided by onboard applications, e.g., a calendar application and similarly from third party applications, e. g., facebook, twitter, and Tripit. Tripit provides a dynamic itinerary from which the callee's current status may be easily determined, for example based on reservation information that is shared with the Tripit server. In another embodiment, in a case of a calendar application such as MS Outlook, the present system may set status based on the user's calendar information stored in MS Outlook. So at 2 P.M., according to user's schedule, the user's status becomes "I'm in a meeting with Ernst and Young." At 4 P.M., according to user's schedule, the user's status becomes "I'm playing golf with Steve Jobs." As may be readily appreciated, status in accordance with the present system may be set dynamically by extracting a series of information from different sources, such as MS Outlook and/or Tripit and set the status based on the extracted information and a current time.

In accordance with the present system, the user of the phone device (e.g., callee) is then enabled to respond to the callee's status or act in accordance with that status. For example, a friend of the callee may pay a visit to 243 Embarcadero. As the status changes and are updated on the user's phone, as "I'm in a meeting from 8:00 a.m. to 10:00 a.m."; "Dining at Americano" or "At Tunnel Top", the callee is provided with the updated status, for example as the status is updated, so that the callee may respond, should they choose to, in accordance with the updated status.

Further, when the callee's status changes, e.g., a work related meeting is taking place, the callee may update the status, for example, in a case where the meeting runs over the stated time. For example the callee may simply re-record the status providing updated information or change the status via an SMS. In accordance with an embodiment of the present system, the updated status may be inferred by the application running on the callee phone in response to the callee not changing their location after a scheduled end of the meeting as determined by the GPS embedded in the callee's phone device. In accordance with an embodiment of the present system, in response to a call placed to the callee's number between the stated hours, the recorded dynamic status message will be played back to the caller as the callee's voicemail greeting. Similarly, the text of the status message may be sent or texted as an auto-reply in response to a SMS text message. In accordance with the present system, the phone device does not need to be in use or switched on or off for the status message to be sent to the caller either in response to a call or simply as the updated status shown within the UI of the caller as illustratively shown in FIG. 1c.

In accordance with an embodiment of the present system, by providing an updated status messages, the present system enables the caller to contact or otherwise respond to the callee based on the updated status or even based on a past or future status (e.g., I am on my way to see "Land of the Lost"), in a case wherein the system is so enabled. In this way, the caller is enabled to contact the callee in relation to the status (e.g., the caller may contact the callee with "hey, I will come down and meet you to see the movie") and the callee may be enabled, in accordance with a embodiment of the present system, to retrieve/sort messages based on the status. For example, the callee may be enabled to select a past, present or future status and retrieve all messages related to that status. In this way, the callee may decide to retrieve all messages related to a current status, such as "hanging out at home tonight watching the ballgame", to see if any friends contacted the callee to convey that they would also like to come over and hang out with the callee. Beneficially, these messages may be retrieved/sorted separate from other messages that are sent based on a different callee status. For example, in response to a caller contacting a callee, the status at that time may be appended or otherwise associated with the caller's message, for example, such that callee may utilize that status to review messages left by callers. Further, the UI of the callee device may enable the callee to see all messages sent by callers based on the callee's status at the time that the messages where sent by the callers, so that for example, messages may be sorted separately for a "working status" from messages sent during a "hanging out" status.

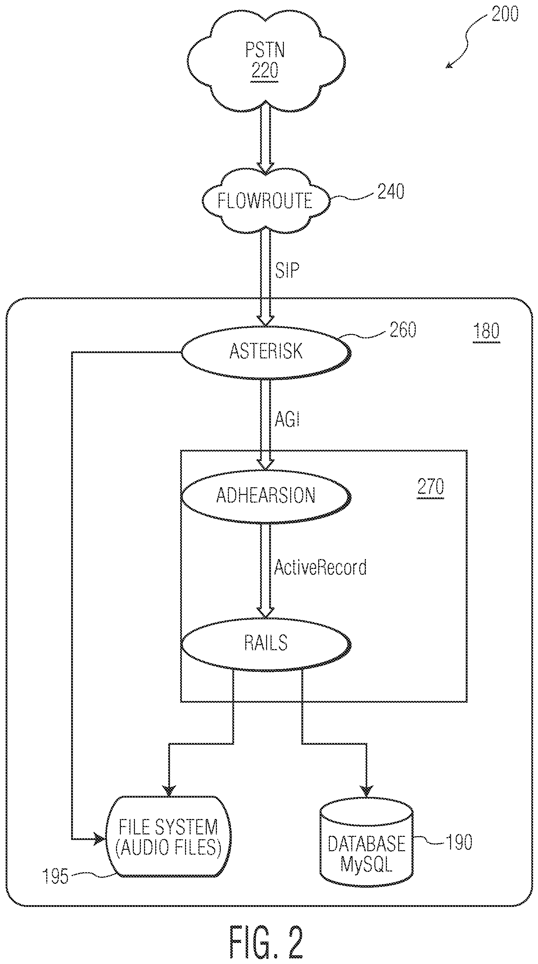

FIG. 2 shows a high-level system diagram of an exemplary implementation of an embodiment of a present system 200 that provides the status functionality discussed herein. When a voice call comes in to the PSTN 220, it may be redirected to a Direct Inward Dialing (DID) service provider 240, such as Flowroute, that provides phone numbers to forward redirected calls to a server 260, e.g., utilizing Asterisk, a software implementation of a telephone (PBX), on, for example, a web service that provides resizable compute capacity to make web-scale computing easier as computing requirements change, e.g., Amazon's EC2 cloud. For example, the status server may connect to the provider using a session initiation protocol (SIP).

In accordance with an embodiment of the present system, the server 260 may reside on the status server 180. Once the server 260 receives the forwarding call, it passes it along to a framework 270, e.g., Adhearsion, via Asterisk Gateway Interface (AGI) interface, Rails, etc. For example, Adhearsion is an open source voice development framework for the ruby programming language. Adhearsion is intended to be used to voice enable web applications Based on caller_id, RDINS, and some other information. Adhearsion uses ActiveRecord, a Ruby programming language library that implements the object-relational mapping (ORM) design pattern to request relevant information from server (Rails) which will perform the intended tasks such as play voicemail greetings. Rails is a web-application framework that facilitates creating database-backed web applications. As previously provided, the redirected voice call may be directed to a file system 195, such as a file system supporting audio files or other database 190, such as a MySQL database.

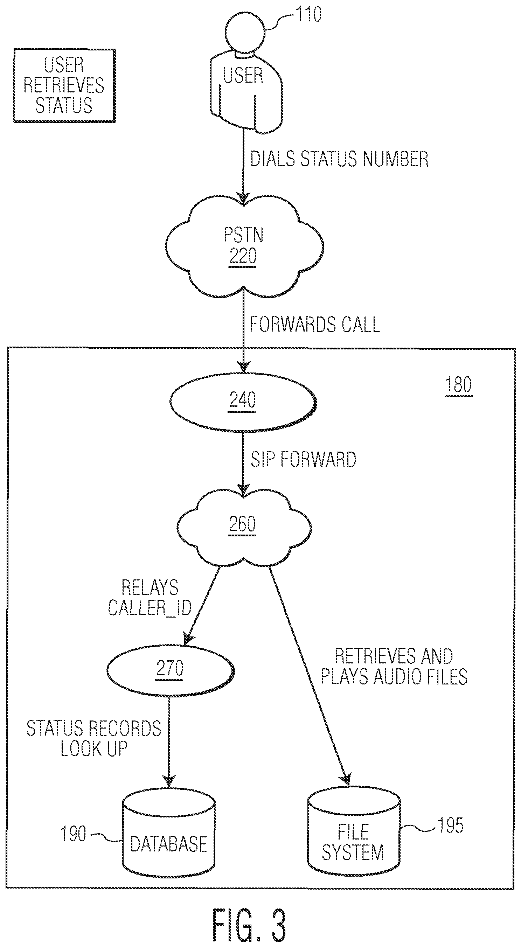

FIG. 3 shows a diagram of one embodiment of the present system illustrating different ways of retrieving the callee' status. As illustrated, the retrieval of the callee's status may be achieved in the following manner. First, in the traditional way the callee 110 may dial a number of the DID 240. DID 240 may forward the call to the server 260. The framework 270 may identify a status message of the callee recorded in the database 190, and play it back to the callee 110. In accordance with an embodiment of the present system, the status may be retrieved by the client application, via, for example, visual tools provided within the UI of the callee's device. The callee 110 may be further enabled to retrieve a list of status messages from within the status server database and may play them back, select one or more of them, delete them, etc.

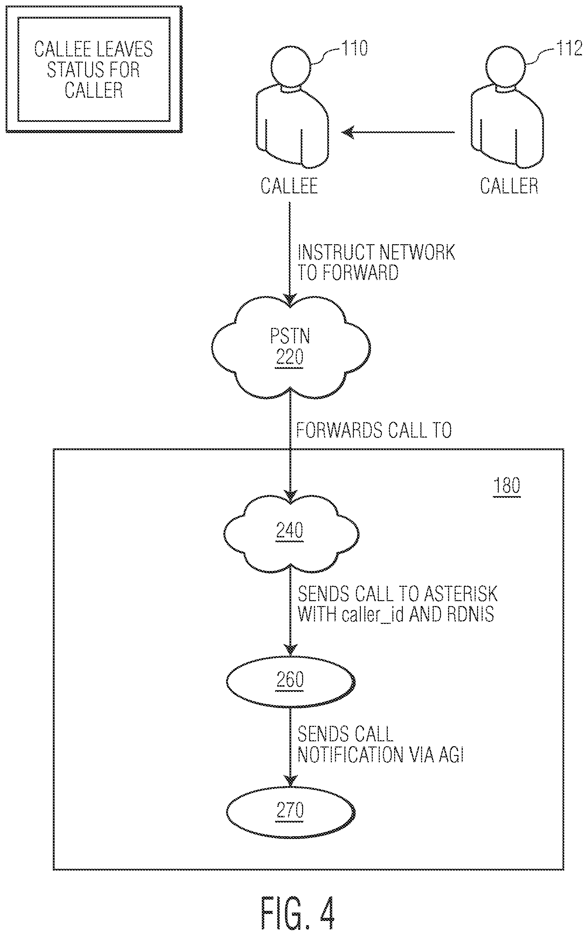

FIG. 4 shows a diagram of one embodiment of the present system illustrating use of the callee's status. As illustrated, if the callee 110 has set the status, then the system may perform call-forwarding on unanswered calls. Based on caller_id and RDNIS, the framework 270 may play the status message and allow a caller 112 to record their voicemail.

When the callee 110 sets a private status, they may, for example, select from default, text, text to speech, voice, and third party determined status. In accordance with the present system, the status message is dynamic ands as such, may be replaced by a new message from the callee 110 at any time or otherwise changed, for example by a third party. For example, a third party determined status may be available at the network, e.g., the Internet, level so that the dynamic status is available and updated to the status server at any time.

Additionally, the choice of sources may be configurable based on user settings and preferences, for example to set what source is utilized over another source (e.g., third party status vs. status set by the callee) and which follows when a preceding source is not available.

FIG. 5 shows a basic appearance of a device 500 (e.g., phone device, server, etc.) in accordance with an embodiment of the present system. For example, a portion of the device of present system may include a processor 510 operationally coupled to a memory 520, a display 530 and a user input device 570. The memory 520 may be any type of device for storing application data as well as other data related to the described operation. The application data and other data are received by the processor 510 for configuring (e.g., programming) the processor 510 to perform operation acts in accordance with the present system. The processor 510 so configured becomes a special purpose machine particularly suited for performing in accordance with the present system.

The operation acts may include requesting, providing, and/or rendering of content. The user input 570 may include a keyboard, mouse, trackball or other device, including touch sensitive displays, which may be stand alone or be a part of a system, such as part of a personal computer, personal digital assistant, mobile phone, set top box, television or other device for communicating with the processor 510 via any operable link. The user input device 570 may be operable for interacting with the processor 510 including enabling interaction within a UI as described herein. Clearly the processor 510, the memory 520, display 530, and/or user input device 570 may all or partly be a portion of a computer system or other device such as a callee/caller device and/or server as described herein.

The methods of the present system are particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 520 or other memory coupled to the processor 510.

The program and/or program portions contained in the memory 520 configure the processor 510 to implement the methods, operational acts, and functions disclosed herein. The memories may be distributed, for example between the clients and/or servers, or local, and the processor 510, where additional processors may be provided, may also be distributed, or may be singular. The memories may be implemented as electrical, magnetic or optical memory, or any combination of these or other types of storage devices. Moreover, the term "memory" should be construed broadly enough to encompass any information able to be read from or written to an address in an addressable space accessible by the processor 510. With this definition, information accessible through a network is still within the memory, for instance, because the processor 510 may retrieve the information from the network for operation in accordance with the present system.

The processor 510 is operable for providing control signals and/or performing operations in response to input signals from the user input device 570 as well as in response to other devices of a network and executing instructions stored in the memory 520. The processor 510 may be an application-specific or general-use integrated circuit(s). Further, the processor 510 may be a dedicated processor for performing in accordance with the present system or may be a general-purpose processor wherein only one of many functions operates for performing in accordance with the present system. The processor 510 may operate utilizing a program portion, multiple program segments, or may be a hardware device utilizing a dedicated or multi-purpose integrated circuit.

Finally, the above discussion is intended to be merely illustrative of the present system and should not be construed as limiting the appended claims to any particular embodiment or group of embodiments. A further embodiment of the present system may provide a UI that operates as a browser extension, such as a browser plug-in, that may add selection items (e.g., radio buttons), modify selection items, and/or modify operation of the browser (e.g., provide a UI in accordance with the present system within a browser window) for operation with the present system as described herein.

Further, while the discussion above generally discussed a text/voice status, in another embodiment, status may be a video status and/or some other multimedia form. In this way, any media may be expressed as status. For example, a user may stand in front of the Eiffel tower and video recording them self with the tower in the background. This video recording may be utilized in accordance with an embodiment of the present system to set a status. For example, a voice component of the video recording may be extracted from the video and transcribed, thus may be used as voicemail greeting and sent as an SMS text-reply. In a case wherein the caller has video capability (e.g., the caller's phone has video capability), then the callee status may be viewed as the video.

Thus, while the present system has been described with reference to exemplary embodiments, including user interfaces, it should also be appreciated that numerous modifications and alternative embodiments may be devised by those having ordinary skill in the art without departing from the scope of the present system as set forth in the claims that follow. Further, while exemplary user interfaces are provided to facilitate an understanding of the present system, other user interfaces may be provided, and/or elements of one user interface may be combined with another of the user interfaces in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

## Claims

1. A method of enabling a first user (112) of a plurality of users of communication devices to contact second users selected from the plurality of users, the method comprising acts of:
providing a status indication of the second users on a communication device of the first user, (112) the status indication indicating a corresponding status for each of the second users;
transmitting a message to a given one (110) of second users through use of the first user (112) device;
associating the status indication of the given one (110) of second users to the message transmitted to the given one (110) of second users; and
**characterised by** rendering the message on a device of the given one (110) of second users together with the associated status indication.

2. The method of claim 1, comprising an act of receiving the status indication from a status server connected to a network having third party systems that include status for one or more of the plurality of users and the status indication is retrieved over the network from third party systems, the status indication on the third party systems being provided by a third party independent from the one or more of the plurality of users.

3. The method of claim 2, wherein the network is the Internet.

4. The method of claim 1, wherein the providing act is performed in response to receiving a request for the status indications from the first user, the request being received in a format selected from one of voice and SMS format.

5. The method of claim 1, further comprising an act of determining if the first user has privileges to receive the status indications of the second users before the act of providing the status indications.

6. The method of claim 1, comprising an act of providing the first user with an updated status indication of one or more of the second users in response to the one or more of the second users updating their corresponding status indication.

7. The method of claim 6, wherein the message is a first message, the method comprising acts of:
providing the first user with an updated status indication of one or more of the second users in response to the one or more of the second users updating their corresponding status indication;
transmitting a second message to a given one of second users through use of the first user device;
associating the updated status indication to the second message transmitted to the given one of second users; and
rendering the second message on a device of the given one of second users together with the associated updated status indication.

8. The method of claim 1, wherein the communication device of the first user is a mobile phone registered to the first user.

9. The method of claim 1, wherein one or more of the second users having a status indication providing different levels of granularity of status indications for the one or more of the second users, the method comprising an act of determining a relationship between the first user and the one or more of the second users, wherein the act of providing a status indication comprises an act of providing a status indication based on the determined relationship.

10. The method of claim 1, further comprising an act of setting a status indication by one of the second users based on one of receiving a voice recording from a phone device and receiving a text message.

11. The method of claim 1, further comprising an act of setting the status indication by at least one client application executing on a user's communication device.

12. The method of claim 1, wherein the message is a first message, the method comprising acts of:
transmitting a second message from the given one of second users to the first user together with the associated status indication; and
rendering the second message on a device of the first user together with the associated status indication.

13. A system of enabling a first user (112) of a plurality of users of communication devices to contact second users selected from the plurality of users, the system comprising:
a controller device which:
provides a status indication of the second users on a communication device of the first user, (112) the status indication indicating a corresponding status for each of the second users;
transmits a message to a given one (110) of second users through use of the first user (112) device;
associates the status indication of the given one (110) of second users to the message transmitted to the given one (110) of second users; and
**characterised in that** sends the message to a device of the given one (110) of second users for rendering together with the associated status indication.

14. A computer program stored on a computer readable memory medium, the computer program configured to enable a first user (112) of a plurality of users of communication devices to contact second users selected from the plurality of users, the computer program configuring a processor to perform acts of:
providing a status indication of the second users on a communication device of the first user, (112) the status indication indicating a corresponding status for each of the second users;
transmitting a message to a given one (110) of second users through use of the first user (112) device;
associating the status indication of the given one (110) of second users to the message transmitted to the given one (110) of second users; and **characterised by** sending the message to a device of the given one (110) of second users for rendering together with the associated status indication.

## Patentansprüche

1. Verfahren zum Ermöglichen eines ersten Benutzers (112) einer Vielzahl von Benutzern von Kommunikationsvorrichtungen, zweite Benutzer zu kontaktieren, die aus der Vielzahl von Benutzern ausgewählt sind, wobei das Verfahren die folgende Schritte umfasst:
Bereitstellen einer Statusanzeige der zweiten Benutzer auf einer Kommunikationsvorrichtung des ersten Benutzers (112), wobei die Statusanzeige einen entsprechenden Status für jeden der zweiten Benutzer anzeigt;
Übertragen einer Nachricht an einen bestimmten (110) von zweiten Benutzern durch Verwenden der Vorrichtung des ersten Benutzers (112);
Zuordnen der Statusanzeige des bestimmten (110) von zweiten Benutzern zu der Nachricht, die an den bestimmten (110) von zweiten Benutzern übertragen wird; und
**dadurch gekennzeichnet, dass** die Nachricht auf einer Vorrichtung des bestimmten (110) von zweiten Benutzern zusammen mit der zugeordneten Statusanzeige wiedergegeben wird.

2. Verfahren nach Anspruch 1, umfassend einen Schritt des Empfangens der Statusanzeige von einem Statusserver, der mit einem Netzwerk verbunden ist, das Fremdsysteme aufweist, die den Status für einen oder mehrere der Vielzahl von Benutzern enthalten, und wobei die Statusanzeige von den Fremdsystemen über das Netzwerk abgerufen wird, wobei die Statusanzeige auf den Fremdsystemen durch Dritte bereitgestellt wird, die unabhängig von dem einen oder den mehreren der Vielzahl von Benutzern sind.

3. Verfahren nach Anspruch 2, wobei das Netzwerk das Internet ist.

4. Verfahren nach Anspruch 1, wobei der Bereitstellungsschritt in Reaktion auf das Empfangen einer Anforderung für die Statusanzeigen von dem ersten Benutzer durchgeführt wird, wobei die Anforderung in einem Format empfangen wird, das aus einem Sprach- oder SMS-Format ausgewählt ist.

5. Verfahren nach Anspruch 1, ferner umfassend einen Schritt des Bestimmens, ob der erste Benutzer Berechtigungen hat, die Statusanzeigen der zweiten Benutzer zu empfangen, vor dem Schritt des Bereitstellens der Statusanzeigen.

6. Verfahren nach Anspruch 1, umfassend einen Schritt des Bereitstellens einer aktualisierten Statusanzeige von einem oder mehreren der zweiten Benutzer für den ersten Benutzer in Reaktion darauf, dass der eine oder die mehreren der zweiten Benutzer ihre entsprechende Statusanzeige aktualisieren.

7. Verfahren nach Anspruch 6, wobei die Nachricht eine erste Nachricht ist, wobei das Verfahren die folgenden Schritte umfasst:
Bereitstellen einer aktualisierten Statusanzeige von einem oder mehreren der zweiten Benutzer für den ersten Benutzer in Reaktion darauf, dass der eine oder die mehreren der zweiten Benutzer ihre entsprechende Statusanzeige aktualisieren;
Übertragen einer zweiten Nachricht an einen bestimmten von zweiten Benutzern durch Verwenden der Vorrichtung des ersten Benutzers;
Zuordnen der aktualisierten Statusanzeige zu der zweiten Nachricht, die an den bestimmten von zweiten Benutzern übertragen wird; und
Wiedergeben der zweiten Nachricht auf einer Vorrichtung des bestimmten von zweiten Benutzern zusammen mit der zugeordneten aktualisierten Statusanzeige.

8. Verfahren nach Anspruch 1, wobei die Kommunikationsvorrichtung des ersten Benutzers ein Mobiltelefon ist, das auf den ersten Benutzer registriert ist.

9. Verfahren nach Anspruch 1, wobei einer oder mehrere der zweiten Benutzer eine Statusanzeige besitzen, die verschiedene Ebenen einer Detailtiefe von Statusanzeigen für den einen oder die mehreren der zweiten Benutzer bereitstellt, wobei das Verfahren einen Schritt des Bestimmens einer Beziehung zwischen dem ersten Benutzer und dem einen oder den mehreren der zweiten Benutzer umfasst, wobei der Schritt des Bereitstellens einer Statusanzeige einen Schritt des Bereitstellens einer Statusanzeige basierend auf der bestimmten Beziehung umfasst.

10. Verfahren nach Anspruch 1, ferner umfassend einen Schritt des Setzens der Statusanzeige durch einen der zweiten Benutzer basierend auf dem Empfangen einer Sprachaufzeichnung von einer Telefonvorrichtung oder dem Empfangen einer Textnachricht.

11. Verfahren nach Anspruch 1, ferner umfassend einen Schritt des Setzens der Statusanzeige durch mindestens eine Client-Anwendung, die auf einer Kommunikationsvorrichtung eines Benutzers ausgeführt wird.

12. Verfahren nach Anspruch 1, wobei die Nachricht eine erste Nachricht ist, wobei das Verfahren die folgenden Schritte umfasst:
Übertragen einer zweiten Nachricht von dem bestimmten von zweiten Benutzern an den ersten Benutzer zusammen mit der zugeordneten Statusanzeige; und
Wiedergeben der zweiten Nachricht auf einer Vorrichtung des ersten Benutzers zusammen mit der zugeordneten Statusanzeige.

13. System zum Ermöglichen eines ersten Benutzers (112) einer Vielzahl von Benutzern von Kommunikationsvorrichtungen, zweite Benutzer zu kontaktieren, die aus der Vielzahl von Benutzern ausgewählt sind, wobei das System Folgendes umfasst:
eine Steuervorrichtung, die:
eine Statusanzeige der zweiten Benutzer auf einer Kommunikationsvorrichtung des ersten Benutzers (112) bereitstellt, wobei die Statusanzeige einen entsprechenden Status für jeden der zweiten Benutzer anzeigt;
eine Nachricht an einen bestimmten (110) von zweiten Benutzern durch Verwenden der Vorrichtung des ersten Benutzers (112) überträgt;
die Statusanzeige des bestimmten (110) von zweiten Benutzern zu der Nachricht zuordnet, die an den bestimmten (110) von zweiten Benutzern übertragen wird; und
**dadurch gekennzeichnet, dass** sie:
die Nachricht an eine Vorrichtung des bestimmten (110) von zweiten Benutzern zur Wiedergabe zusammen mit der zugeordneten Statusanzeige sendet.

14. Computerprogramm, das auf einem computerlesbaren Speichermedium gespeichert ist, wobei das Computerprogramm konfiguriert ist, um einem ersten Benutzer (112) einer Vielzahl von Benutzern von Kommunikationsvorrichtungen zu ermöglichen, zweite Benutzer zu kontaktieren, die aus der Vielzahl von Benutzern ausgewählt sind, wobei das Computerprogramm einen Prozessor zum Ausführen der folgenden Schritte konfiguriert:
Bereitstellen einer Statusanzeige der zweiten Benutzer auf einer Kommunikationsvorrichtung des ersten Benutzers (112), wobei die Statusanzeige einen entsprechenden Status für jeden der zweiten Benutzer anzeigt;
Übertragen einer Nachricht an einen bestimmten (110) von zweiten Benutzern durch Verwenden der Vorrichtung des ersten Benutzers (112);
Zuordnen der Statusanzeige des bestimmten (110) von zweiten Benutzern zu der Nachricht, die an den bestimmten (110) von zweiten Benutzern übertragen wird; und
durch Folgendes gekennzeichnet:
Senden der Nachricht an eine Vorrichtung des bestimmten (110) von zweiten Benutzern zur Wiedergabe zusammen mit der zugeordneten Statusanzeige.

## Revendications

1. Procédé destiné à permettre à un premier utilisateur (112), parmi une pluralité d'utilisateurs de dispositifs de communication, d'entrer en contact avec des seconds utilisateurs sélectionnés parmi la pluralité d'utilisateurs, le procédé comprenant les actes de :
fournir une indication d'état des seconds utilisateurs sur un dispositif de communication du premier utilisateur (112), l'indication d'état indiquant un état correspondant pour chacun des seconds utilisateurs ;
émettre un message vers l'un (110) donné des seconds utilisateurs par utilisation du dispositif du premier utilisateur (112) ;
associer l'indication d'état de celui qui est donné (110) des seconds utilisateurs au message émis vers celui qui est donné (110) des seconds utilisateurs ; et
**caractérisé par** :
restituer le message sur un dispositif de celui qui est donné (110) des seconds utilisateurs avec l'indication d'état associée.

2. Procédé selon la revendication 1, comprenant un acte de recevoir l'indication d'état en provenance d'un serveur d'état connecté à un réseau comportant des systèmes tiers qui comprennent un état pour un ou plusieurs de la pluralité d'utilisateurs et l'indication d'état est extraite par l'intermédiaire du réseau en provenance de systèmes tiers, l'indication d'état concernant les systèmes tiers étant fournie par un tiers indépendant desdits un ou plusieurs de la pluralité d'utilisateurs.

3. Procédé selon la revendication 2, dans lequel le réseau est l'Internet.

4. Procédé selon la revendication 1, dans lequel l'acte de fourniture est effectué en réponse à la réception d'une demande d'indications d'état en provenance du premier utilisateur, la demande étant reçue dans un format sélectionné parmi un format vocal et un format SMS.

5. Procédé selon la revendication 1, comprenant en outre un acte de : déterminer si le premier utilisateur a des privilèges permettant de recevoir les indications d'état des seconds utilisateurs avant l'acte de fourniture des indications d'état.

6. Procédé selon la revendication 1, comprenant un acte de : fournir au premier utilisateur une indication d'état mise à jour d'un ou plusieurs des seconds utilisateurs en réponse à la mise à jour par lesdits un ou plusieurs des seconds utilisateurs de l'indication d'état qui leur correspond.

7. Procédé selon la revendication 6, dans lequel le message est un premier message, le procédé comprenant les actes de :
fournir au premier utilisateur une indication d'état mise à jour d'un ou plusieurs des seconds utilisateurs en réponse à la mise à jour par lesdits un ou plusieurs des seconds utilisateurs de l'indication d'état qui leur correspond ;
émettre un second message vers l'un, donné, des seconds utilisateurs par utilisation du dispositif du premier utilisateur ;
associer l'indication d'état mise à jour au second message émis vers celui qui est donné des seconds utilisateurs ; et
restituer le second message sur un dispositif de celui qui est donné des seconds utilisateurs avec l'indication d'état mise à jour associée.

8. Procédé selon la revendication 1, dans lequel le dispositif de communication du premier utilisateur est un téléphone mobile enregistré pour le premier utilisateur.

9. Procédé selon la revendication 1, dans lequel un ou plusieurs seconds utilisateurs ont une indication d'état fournissant différents niveaux de granularité d'indications d'état pour lesdits un ou plusieurs des seconds utilisateurs, le procédé comprenant un acte de : déterminer une relation entre le premier utilisateur et lesdits un ou plusieurs des seconds utilisateurs, dans lequel l'acte de fournir une indication d'état comprend un acte de : fournir une indication d'état sur la base de la relation déterminée.

10. Procédé selon la revendication 1, comprenant en outre un acte de : définir par l'un des seconds utilisateurs une indication d'état sur la base de l'une ou l'autre de la réception d'un enregistrement vocal en provenance d'un dispositif téléphonique et de la réception d'un message textuel.

11. Procédé selon la revendication 1, comprenant en outre un acte de : définir l'indication d'état par au moins une application cliente s'exécutant sur le dispositif de communication d'un utilisateur.

12. Procédé selon la revendication 1, dans lequel le message est un premier message, le procédé comprenant les actes de :
émettre un second message depuis celui qui est donné des seconds utilisateurs vers le premier utilisateur avec l'indication d'état associée ; et
restituer le second message sur un dispositif du premier utilisateur avec l'indication d'état associée.

13. Système destiné à permettre à un premier utilisateur (112), parmi une pluralité d'utilisateurs de dispositifs de communication, d'entrer en contact avec des seconds utilisateurs sélectionnés parmi la pluralité d'utilisateurs, le système comprenant :
un dispositif de commande qui :
fournit une indication d'état des seconds utilisateurs sur un dispositif de communication du premier utilisateur (112), l'indication d'état indiquant un état correspondant pour chacun des seconds utilisateurs ;
émet un message vers l'un (110), donné, des seconds utilisateurs par utilisation du dispositif du premier utilisateur (112) ;
associe l'indication d'état de celui qui est donné (110) des seconds utilisateurs au message émis vers celui qui est donné (110) des seconds utilisateurs ; et
**caractérisé en ce qu'**il
envoie le message sur un dispositif de celui qui est donné (110) des seconds utilisateurs pour sa restitution avec l'indication d'état associée.

14. Programme d'ordinateur stocké sur un support de mémoire lisible par ordinateur, le programme d'ordinateur étant configuré pour permettre à un premier utilisateur (112), parmi une pluralité d'utilisateurs de dispositifs de communication, d'entrer en contact avec des seconds utilisateurs sélectionnés parmi la pluralité d'utilisateurs, le programme d'ordinateur configurant un processeur afin qu'il effectue les actes de :
fournir une indication d'état des seconds utilisateurs sur un dispositif de communication du premier utilisateur (112), l'indication d'état indiquant un état correspondant pour chacun des seconds utilisateurs ;
émettre un message vers l'un (110), donné, des seconds utilisateurs par utilisation du dispositif du premier utilisateur (112) ;
associer l'indication d'état de celui qui est donné (110) des seconds utilisateurs au message émis vers celui qui est donné (110) des seconds utilisateurs ; et
**caractérisé en ce qu'**il
envoie le message à un dispositif de celui qui est donné (110) des seconds utilisateurs pour sa restitution avec l'indication d'état associée.
